# EUROPEAN PATENT SPECIFICATION

(11) **EP 2 783 108 B1**
(45) Date of publication and mention of the grant of the patent: **12.10.2016**
(21) Application number: 12746039.2
(22) Date of filing: 11.07.2012
(51) Int. Cl.: F03D 80/00, F03D 7/02, H02M 5/458, H02J 3/38

(54) **WIND POWER STATION**
WINDKRAFTSTATION
CENTRALE ÉOLIENNE

(30) Priority: 11.07.2011 DE 102011051732; 18.11.2011 US 201161561730 P; 05.01.2012 DE 202012100041 U
(43) Date of publication of application: 01.10.2014
(73) Proprietor: PCS Power Converter Solutions GmbH, 13507 Berlin (DE)
(72) Inventor: LERWE, Olaf, 16269 Wriezen (DE)
(74) Representative: Maikowski & Ninnemann Patentanwälte Partnerschaft mbB
(86) International application number: PCT/EP2012/063579
(87) International publication number: WO 2013/007749

(56) References cited:
- DE-A1- 10 117 212
- US-A1- 2007 024 059
- US-A1- 2008 143 111

## Description

The invention relates to a wind power station according to the preamble of claim 1 and to a method for operating the wind power station.

Such a wind power station comprises a wind turbine capable of being driven by wind power, a generator capable of being driven by the wind turbine, a frequency converter electrically connected to the generator and a control device for controlling the frequency converter. The generator is designed to transform kinetic energy of the wind turbine into an electrical alternating current. The frequency converter is in turn to be connected to an electricity grid and is designed to convert the electric alternating current generated by the generator for feeding into the electricity grid. For this purpose the frequency converter comprises a generator converter connected to the generator, an intermediate circuit connected to the generator converter and a grid converter connected to the intermediate circuit for connecting to the electricity grid. The generator converter and the grid converter comprise in each case one or multiple semiconductor switches and diode elements anti-parallel connected to the semiconductor switches.

The semiconductor switches can be designed for instance as transistors, in particular IGBTs (Insulated Gate Bipolar Transistors). The diode elements serve thereby conventionally as so called free wheeling diodes and serve for protecting against an overvoltage when switching the semiconductor switches.

Conventional wind power stations of this kind are for instance known from DE 101 17 212 A1, DE 103 34 051 A1, and US 2007/0024059 A1.

In general, converters are known in wind power stations, which use as generator converter either a so called 4-quadrant converter (operated as frequency converter) using semiconductor switches or a diode rectifier (according to the type of a so called B6-Bridge) using diode elements. In case of a 4-quadrant converter the semiconductor switches are hereby switched in order to generate a DC voltage / DC current from the alternating current generated by the generator in a commutated manner, which is fed into the intermediate circuit. The semiconductor switches are therefore controlled in a pulsed manner and thus fired in a pulsed manner in order to rectify the applied alternating voltage. In contrast thereto, diode rectifiers use passive designed diode elements, which do not have to be switched and which rectify the applied alternating voltage into DC voltage / DC current in a passive manner. The grid converter of the converter serves then to alternating convert the DC voltage/DC current of the intermediate circuit such that the energy can be fed into the electricity grid.

Converters of this kind serve in this way to convert frequency variable alternating currents generated by the generator in frequency, amplitude and phase such that an energy feeding into the electricity grid can occur.

When using a generator converter, which is constructed and operated as 4-quadrant converter, the voltage present in the intermediate circuit (the so called intermediate circuit DC voltage) cannot be exceeded by the maximum voltage supplied by the generator. Otherwise, the diode elements of the generator converter would become permeable and a pulsed operation of the generator converter would not (anymore) be possible. Accordingly, in case of a generator designed for instance as a synchronous generator the excitation has to be chosen such that the output voltage of the generator is in a permissible range.

In contrast to a generator converter configured as a 4-quadrant converter in case of a generator converter, which is constructed and operated as diode rectifier using exclusively diode elements, a current flow starts only if the voltage generated by the generator is above the intermediate circuit DC voltage. This has the consequence that in case of a generator converter operated as a diode rectifier energy can be fed into the electricity grid only at comparably high wind velocities. This is because only at high wind velocities the generator is able to generate an output voltage exceeding the intermediate circuit DC voltage.

The use of a generator converter designed as a 4-quadrant converter at large wind velocities is uneconomical in comparison to a diode rectifier, since the generator has to be designed with a lower excitation for generating a comparable small output voltage. The use of a generator converter designed as a 4-quadrant converter has, however, advantages at lower wind velocities, since energy can be fed into the electricity grid also at lower wind velocities.

The object of the present invention is to provide a wind power station and a method for operating a wind power station, which allow the generation and feeding of energy into a electricity grid at comparable low as also comparable high wind velocities in an efficient manner by using a synchronous generator designed for use of a diode rectifier.

This object is being solved by a wind power station with the features of claim 1.

Accordingly, the control device of the wind power station is designed to operate the generator converter depending on the wind power driving the wind turbine
- by pulsed switching of the at least one semiconductor switch in a first operating mode, or
- by shifting the at least one semiconductor switch into a locked state in a second operating mode different from the first operating mode.

The present invention is based on the idea to operate the generator converter in dependency on the available wind power, thus the wind velocity, in different operating modi. In a first operating mode the generator converter is thereby operated for instance as 4-quadrant converter by controlling and firing the semiconductor switches of the generator converter in a pulsed manner in order to rectify the voltage generated by the generator and to feed a DC current into the intermediate circuit. In contrast, in a second operating mode the semiconductor switches are controlled such that they lock, thus they are not being fired, such that the generator converter is operated as an diode rectifier and a rectification occurs in a passive manner via the diode elements being anti-parallel connected to the semiconductor switches.

The semiconductor switches are not controlled anymore by firing pulses (for rectified switching of the semiconductor switches) for changing from the first operating mode into the second operating mode such that the semiconductor switches lock in the second operating mode. The generator converter is then operated as a diode rectifier, wherein, as will be explained in the following, the excitation of the generator can be adapted such that the generator provides a generator output voltage, which allows a feeding of current into the intermediate circuit via the generator converter being operated as diode rectifier.

The control device can be in particular designed to operate the generator converter in a first wind power range below a predetermined wind velocity, speed of the generator or power of the generator in the first operating mode and in a second wind power range above a predetermined wind velocity, speed of the generator or power of the generator in a second operating mode. In case of a comparable low wind velocity, speed of the generator or power of the generator the generator converter is thereby operated for instance as 4-quadrant converter, in contrast at comparably large wind velocities as diode rectifier.

By providing the wind power station it is possible to feed energy into an electricity grid in an efficient manner at low wind velocities as well as at high wind velocities. In case of low wind velocities, at which a diode rectifier cannot be used as a generator converter, the generator converter is operated for instance as a 4-quadrant converter. In contrast, in case of large wind velocities, at which the use of for instance a 4-quadrant converter as a generator converter can be uneconomical, the generator converter is operated as a diode converter and thus in an economical manner.

By operating the generator converter in the first operating mode for instance as a 4-quadrant converter at low wind velocities, a feeding of energy into an electricity grid can become possible at such wind velocities in the first place.

In contrast, by operating the generator converter at large wind velocities in the second operating mode as diode rectifier the generator can be operated by such wind velocities with high excitation and thus high power. Furthermore, switching losses of the semiconductor switches are omitted.

The predetermined wind velocity or the speed or power of the generator, at which it is switched between the first operating mode and the second operating mode of the generator converter, can be dependent on the design and optimization of the station. For instance, it can be of an advantage to switch the generator converter at a wind velocity, which is between 4 m/s and 8 m/s, preferably between 4 m/s and 6 m/s. For instance, a limit velocity of 5 m/s can be provided such that below a wind velocity of 5 m/s the generator converter is operated in the first operating mode for instance as 4-quadrant converter and at wind velocities above of 5 m/s the generator converter is operated in the second operating mode as diode rectifier. Similar criteria can be provided for speed of the generator or its current power. It can be for instance provided that the operating mode of the generator converter changes between the first operating mode and the second operating mode at a limit power between 10% and 30% of the nominal power, in particular between 20% and 30% of the nominal power. Or it can be provided that the generator converter switches at a predetermined speed of the generator between 1200 U/m and 1400 U/m, for instance 1250 U/m or 1300 U/m.

In a preferred embodiment it can be provided that the control device operates depending on the wind power driving the wind turbine the generator converter by pulsed switching of the at least one semiconductor switch as 4-quadrant converter or by shifting the at least one semiconductor switch into a locked state as diode rectifier. The first operating mode corresponds therefore to a 4-quadrant converting operation. In contrast, the second operating mode corresponds to a diode rectifying operation. The generator converter is accordingly designed and constructed.

The generator is preferably designed for generating a three phase alternating current and comprises accordingly three connections of which each is connected via a first path of the generator converter to a first path of the intermediate circuit and is connected via a second path of the generator converter to a second path of the intermediate circuit in case of this design of the generator converter. In general, the generator can also comprise more than three connections or also multiple three phase systems. In each path of the generator converter a semiconductor switch and a diode element anti-parallel connected thereto are hereby arranged. During 4-quadrant converting operation a 4-quadrant converter is provided as generator converter. During the diode rectifying operation, the generator converter is provided as a diode rectifier, which is also designated as a so called B6-Bridge.

During diode rectifying operation the diode elements being anti-parallel connected to the semiconductor switches in conventional 4-quadrant converters are used as diodes for rectification. These diode elements serve conventionally as free wheeling diodes for protection against overvoltage. In an improvement it can be provided that in addition to these diode elements usually serving as free wheeling diodes a second diode element is to be arranged in each path of the generator converter that serves during a diode rectifying operation of the generator converter preferably for conducting the current and comprise therefore advantageously a threshold voltage, which is smaller than the threshold voltage of the first diode element serving as free wheeling diode. The threshold voltage is in this context the voltage above which a diode becomes conductive.

Alternatively, it can also be provided that in each path of the generator converter a thyristor is switched parallel to the diode element serving as free wheeling diode, the thyristor comprising also preferably a threshold voltage which is smaller than the one of the diode element. During diode operation, the thyristor is constantly fired and thus resembles a diode in its operation behavior during diode rectifying operation of the generator converter.

As previously described the generator converter can be provided and constructed to be operated in the first operating mode as 4-quadrant converter and in the second operating mode as diode converter. In another preferred embodiment it can also be provided in case of a different construction of the generator converter to operate the generator converter in the first operating mode in a DC voltage transforming operation as diode rectifier with downstream DC voltage transformation and in the second operating mode in a diode rectifying operation as diode rectifier. A different construction of the generator converter is provided, which is operated in the first operating mode or the second operating mode by accordingly controlling the semiconductor switches. For this reason, the control device is designed to operate the generator converter depending on the wind power driving the wind turbine by pulsed switching of the at least one semiconductor switch during the DC voltage transforming operation as diode rectifier with downstream DC voltage transformation or by shifting the at least one semiconductor switch into the locked state in the diode rectifying operation as diode rectifier.

By designing the generator converter in this manner, a DC voltage rectified by a diode rectifying circuit can be transformed during the DC voltage transforming operation by pulsed switching of the at least one semiconductor switch and the transformed DC voltage can be provided to the intermediate circuit. In contrast, during diode rectifying operation, the DC voltage rectified by the diode rectifying circuit is provided directly to the intermediate circuit by shifting the at least one semiconductor switch into the locked state. Thus, in the first operating mode an active DC voltage transformation of the voltage occurs, which is provided by the generator and is rectified. In contrast, in the second operation mode, no transformation occurs, rather the DC voltage, which is provided by the generator and rectified, is fed directly in a passive manner to the intermediate circuit.

In this modification the generator converter comprises preferably a diode rectifying circuit and a DC voltage transforming circuit, a component thereof being the at least one semiconductor switch. The diode rectifying circuit is connected on the one hand to the generator and on the other hand to the intermediate circuit via the DC voltage transforming circuit. The diode rectifying circuit rectifies a voltage generated by the generator and provides it to the DC voltage transforming circuit, wherein depending on the control of the at last one semiconductor switch of the DC voltage transforming circuit the rectified voltage is transformed in the first operating mode or is provided to the intermediate circuit in the second operating mode in a non-transformed manner.

Each connection of the generator is hereby connected via a first path of the diode rectifying circuit to a first path of the DC voltage transforming circuit and connected via a second path of the diode rectifying circuit to a second path of the DC voltage transforming circuit. In each path of the diode rectifying circuit a diode element is hereby arranged such that the diode rectifying circuit is constructed as a sole diode rectifier - designated also as B6-Bridge. If the semiconductor switch of the DC voltage transforming circuit is controlled in a pulsed manner the voltage rectified by the diode rectifying circuit is transformed and accordingly the generator converter is operated in the first operating mode as DC voltage converter (also designated as DC-DC converter or DC-DC chopper). If the at least one semiconductor switch of the DC voltage transformer is shifted into a locked state, the generator converter is operated in the second operating mode as sole diode rectifier.

The generator converter is operated in particular at low wind power in the first operating mode and thus as a DC voltage transformer (DC-DC chopper). In this operating mode the DC voltage transformer can transform a comparable low DC voltage provided by the diode rectifying circuit into a larger voltage and provide it to the intermediate circuit. In this manner, a feeding of energy into an electricity grid is also possible at lower wind power, wherein in comparison to a construction of the generator converter, which is operated in the first operating mode as 4-quadrant converter, an easier and simpler regulation is provided since basically no determination of the number of rotations for operating the converter is required.

The intermediate circuit can comprise preferably a condenser, which connects the two paths of the intermediate circuit with each other.

The generator is preferably designed as a synchronous generator, in particular as a synchronous generator excited separately. It can hereby be provided to adjust the excitation of the generator depending on the used operating modi of the generator converter, in particular to increase the excitation of the synchronous generator during switching the generator converter into the second operating mode (the diode rectifying operation) such that the generator provides a higher output voltage and therefore the generator converter can be used economically as a diode rectifier.

In this context it is conceivable to operate the generator when using the generator converter in the first operating mode (e.g. as 4-quadrant converter) with a comparable low constant excitation in the meaning of a permanently excited synchronous generator. When switching the generator converter into the second operating mode the excitation of the synchronous generator is then increased and the synchronous generator is operated in the second operating mode of a generator converter constantly with a high excitation.

In this context it is also conceivable to vary the excitation of the generator within the single operating modi of the generator converter, for instance to choose a comparable large excitation at very low wind velocities in the first operating mode (e.g. in the 4-quadrant converter operation) of a generator converter in order to increase the excitation at larger wind velocities within the first operating mode and if the generator converter is switched into the second operating mode.

The semiconductor switch of a generator converter and the semiconductor switches of the grid converter are preferably designed as transistors, in particular as IGBTs. The use of so-called MOSFETs is however for instance also conceivable.

The object is also being solved by a method for operating a wind power station. It is provided in such a method that a control device of a wind power station operates the generator converter depending on the wind power driving the wind turbine
- by pulsed switching the at least one semi-conductor switch in a first operating mode or
- by shifting the at least one semi-conductor switch into a locked state in a second operating mode different from the first operating mode.

The previously described advantages and preferred embodiments of the wind power station are accordingly also applicable for the method for operating the wind power station.

It is in particular preferably provided that the control device operates the generator converter in a first wind power range below a predetermined wind velocity, below a predetermined speed of the generator or below a predetermined power of the generator in the first operating mode, i.e. as 4-quadrant converter or as DC-voltage transformer (DC-DC-chopper), and in a second wind power range above a predetermined wind velocity, speed of the generator or power of the generator in a second operating mode as diode rectifier.

As previously explained the generator is advantageously designed as a synchronous generator excited separately, wherein the excitation of the generator is increased when changing from the first operating mode into the second operating mode of the generator converter such that in the second operating mode the generator provides in an increased output voltage, which allows (economical) operation of a generator converter as diode rectifier.

In addition it can be provided that the excitation of the generator, when changing from the first operating mode into the second operating mode of the generator converter, has already been increased before the control device shifts the semi-conductor switches of the generator converter into the locked state. The increase of the excitation occurs therefore already before the actual switching of the operating mode occurs. In order to avoid thereby - while the generator converter is still in the first operating mode - an excessive increase of the voltage generated by the generator a blind current can be simultaneously fed into the generator for limiting the voltage generated by the generator. Since an increase of the excitation is already started early before the actual switching of the operating mode the switching of the operating mode can occur in a fast manner such that the wind power station can be switched from one operating mode into the other without long interruptions of the energy feeding.

The idea forming the basis of the invention shall be explained in more detail by the means of the embodiments illustrated in the figures. It shows:
- Fig. 1: a schematic view of a wind power station;
- Fig. 2: a schematic circuit diagram of a frequency converter switched between a generator and an electricity grid for feeding energy from the generator into the electricity grid;
- Fig. 3: a schematic circuit diagram of the frequency converter according to Fig. 2 in a diode rectifying operation of a generator converter of the frequency converter;
- Fig. 4: a schematic circuit diagram of a modified embodiment of a frequency converter, wherein thyristors are connected parallel to diode elements and anti-parallel to semi-conductor switches in paths of a generator converter;
- Fig. 5: a schematic circuit diagram of a further embodiment of a frequency converter wherein additional diode elements are connected parallel to the diode elements and anti-parallel to the semi-conductor switches of the generator converter;
- Fig. 6: a schematic circuit diagram of a further embodiment of a frequency converter switched between a generator and an electricity grid for feeding energy from the generator into the electricity grid; and
- Fig. 7: a schematic circuit diagram of the frequency converter according to Fig. 6 in a diode rectifying operation of a generator converter of the frequency converter.

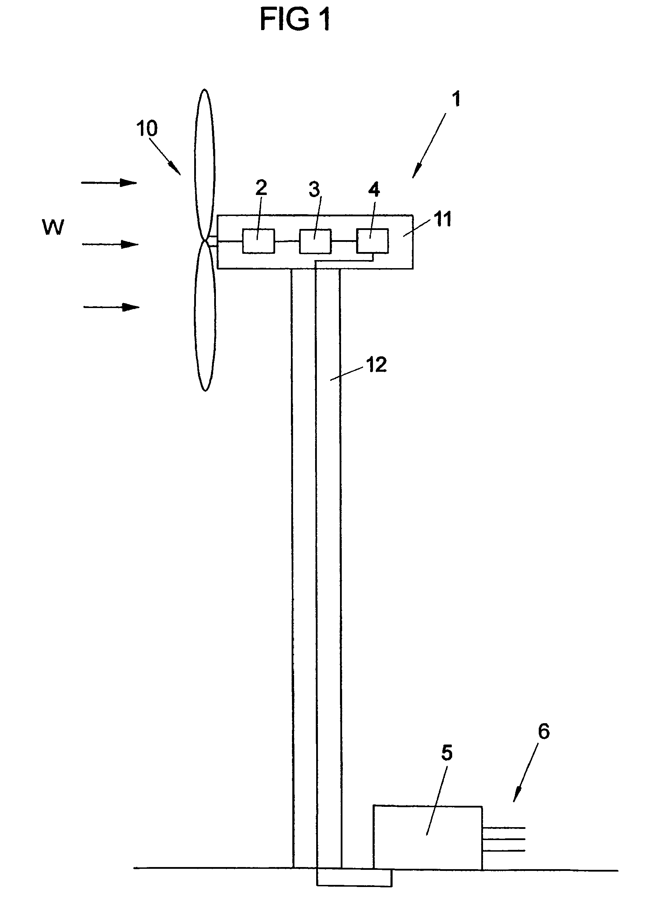

Fig. 1 shows in a schematic view a wind power station 1, which comprises a rotatable wind turbine 10 at a nacelle 11, wherein said wind turbine can be set into a rotation by a wind W. The nacelle 11 is arranged movably on a tower 12 such that the nacelle 11 can be adjusted to the wind direction with the wind turbine 10 arranged thereon.

The wind power station 1 serves the generation of electrical energy from wind power. The wind turbine 10 is for this reason connected via a gear 2 to a generator 3, which is designed to transform the kinematic energy of the wind turbine 10 into electrical energy. The generator 3 is connected to a frequency converter 4 and via the frequency converter 4 to a transformer 5 for feeding the generated electrical energy into an electricity grid 6.

The gear 2 is not necessarily required in this context. The wind turbine 10 can also be coupled optionally directly to the generator 3. The frequency converter 4 can furthermore also be arranged in the tower 12 or outside of the tower 12. Modifications are also possible wherein parts of the frequency converter 4 are arranged in the nacelle 11 and other parts arranged in tower 12 or outside of the tower 12.

Generator 3 shall be designed in the embodiments described herein as a synchronous generator excited separately and is connected via the frequency converter 4 to the electricity grid 6.

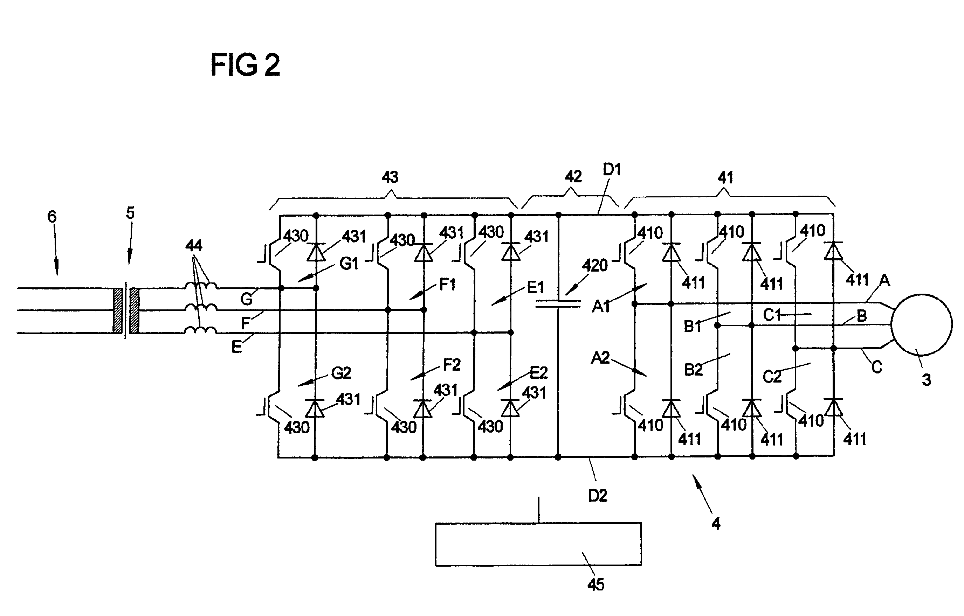

Fig. 2 to 5 show embodiments of a frequency converter 4 in case of which a generator converter 41 on the generator side is operated in a first operating mode as 4-quadrant converter and in a second operating mode as diode rectifier.

On the first embodiment the frequency converter 4 comprises as illustrated in Fig. 2 a generator converter 41 on the generator side, an intermediate circuit 42 and a grid converter 43 on the grid side. The generator converter 41 is connected to three connections A, B, C of the generator 3 via which the generator 3 feeds a three phase alternating current. The grid converter 43 is connected via three paths E, F, G and grid inductors 44 to the transformer 5 and via the transformer 5 to the electricity grid 6.

The frequency converter 4 serves to convert the three phase alternating current generated by generator 3 in frequency, amplitude and phase such that it can be fed into the electricity grid 6. The generator converter 41 serves hereby for rectifying and feeding the three phase alternating current generated by the generator 3 into the (DC-voltage) intermediate circus 42. The grid converter 43 serves for generating a three phase alternating current with desired frequency, amplitude and phase from the current fed into the intermediate circuit 42 for feeding into the electricity grid 6.

The generator converter 41 as well as the grid converter 43 are designed in the illustrated embodiment according to the type of the 4-quadrant converter, which allow the 4-quadrant conversion.

On the side of the generator converter 41 the three connections A, B, C of the generator 3 are herefore connected in each case via a first path A1, B1, C1 and a second path A2, B2, C2 of a generator converter 41 to a first path D1 or a second path D2 of the intermediate circuit 2 wherein in each path A1, A2, B1, B2, C1, C2 of a generator converter 41 a semi-conductor switch 410 is arranged in form of a transistor, in particular an IGBT, and a diode element 411 is arranged in form of a free-wheeling diode.

The grid converter 43 is essentially structurally identical to the generator converter 41 and comprises in paths E1, E2, F1, F2, G1, G2 semi-conductor switches 430 in form of transistors, preferably IGBTs as well as diode elements 431. The intermediate circut 42 is connected via the paths E1, E2 or F1, F2 or G1, G2 to the output paths E, F, G for connection to the electrical grid 6.

The intermediate circuit 42 comprises a condenser 420, which is switched between the paths D1, D2 of intermediate circuit 42.

When operating the frequency converter 4 illustrated in Fig. 2 the generator converter 41 serves for rectifying the three phase alternating current generated by the generator 3 and the grid converter 43 serves for inverting in order to feed the current into the electricity grid 6. The grid converter 43 uses for this a pulse width modulation (PWM) or another pulse method by controlling the semi-conductor switch 431 of the grid converter 43 by a control device 45 for generating current pulses such that a three phase alternating current of a desired frequency, amplitude and phase is fed into the paths E, F, G.

The generator converter 41 serving rectification can be operated in different operating mode and for this can be controlled in different manners by the control device 45.

In a first operating mode the generator converter 41 is operated as 4-quadrant converter in the illustrated embodiment, wherein the semi-conductor switches 410 of a generator converter 41 controlled by the control device 45 are switched for rectifying the three phase alternating current generated by generator 3. For this purpose the semi-conductor switches 410 in form of the transistors are switched in a pulsed manner conductively by releasing firing pulses such that a pulsed operation of the generator converter 41 is provided.

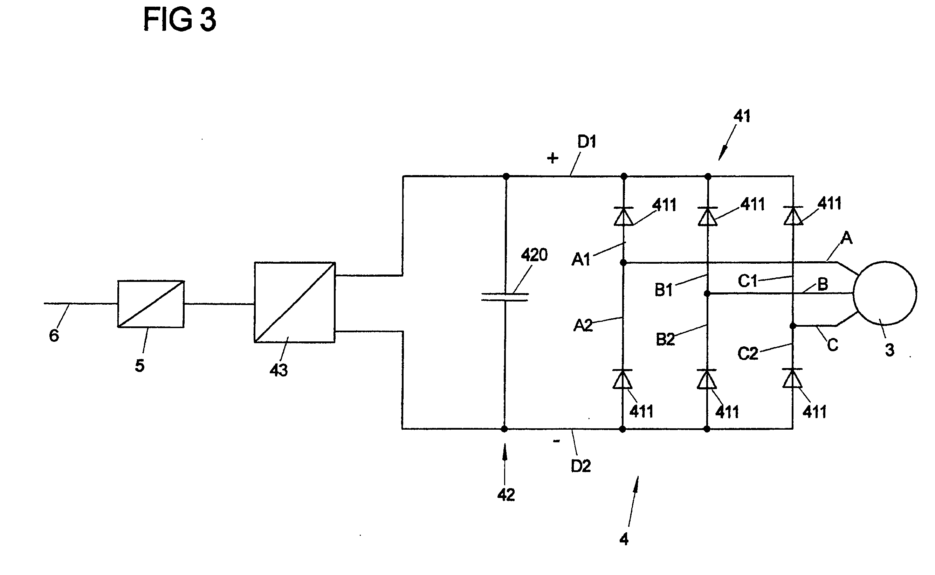

In a second operating mode the generator converter 41 is operated as a diode rectifier. For this purpose the semi-conductor switches 410 are switched off by not releasing firing pulses to the semi-conductor switches 410 and thus only the diode elements 411 in the paths A1, A2, B1, B2, C1, C2 are effective as illustrated in Fig. 3.

If the generator converter 41 is operated in the first operating mode according to the 4-quadrant converter operation then the output voltage of the generator 3 has to be below the intermediate circuit DC-voltage of the intermediate circuit 42 (since otherwise the diode elements 411 in the individual paths A1, A2, B1, B2, C1, C2 could possibly be released). Accordingly, the excitation of the generator 3 is to be chosen small such that an operation of the generator converter 41 can be uneconomical at large wind velocities during 4-quadrant converter operation.

In contrast, when operating the generator converter 41 in the second operating mode according to the diode rectifying operation the output voltage of the generator 3 to the paths A, B, C has to be larger than the intermediate circuit DC-voltage of the intermediate circuit 42 such that a current can be fed from generator 3 into the intermediate circuit 42. Accordingly, the excitation of the generator 3 is to be chosen large such that the generator 3 can generate in accordingly high output voltage.

It is provided within the meaning of the present invention that the generator converter 41 controlled by the control device 45 can be switched back and forth between the first operating mode and the second operating mode depending on the wind power driving the wind turbine, thus the wind velocity.

At low wind velocities the generator converter 41 is switched into the first operating mode and is thus operated as 4-quadrant converter. This allows a feeding of energy from generator 3 via the frequency converter 4 into the electrical grid 6 also at lower wind velocities. Besides the wind velocity also the speed of the generator 3 or the power currently fed into the grid or a combination of these parameters can be used as criteria for switching between the two operating mode.

In contrast, at high wind velocities, speed or power the generator converter is switched into the second operating mode according to the diode rectifying operation and the excitation of the generator 3 is simultaneously increased in order to feed energy into the electricity grid 6 at high wind velocities in an economical efficient manner. A switching of the generator converter 41 occurs thereby such that firing pulses are not (any longer) provided to the semi-conductor switches 410 such that the semi-conductor switches 410 are blocked. Thereby switching losses due to a switching of the semi-conductor switches 410 do also not apply in the diode rectifying operation of the generator converter 41.

Since the generator converter 41 is operated only at lower wind velocities in the 4-quadrant converter operation and accordingly the semi-conductor switches 410 in form of the transistors conduct electricity also only at a comparatively low power of the generator 3, the semi-conductor switches 410 have to be designed also only for a comparatively low power/a comparatively low current. This makes the construction of the generator converter 41 cost efficient.

In the embodiment illustrated in Fig. 2 and 3 the diode elements 411 conduct electricity in the diode rectifying operation and accordingly have to be designed in large size since the generator 3 is operated in the diode rectifying operation with comparatively high power.

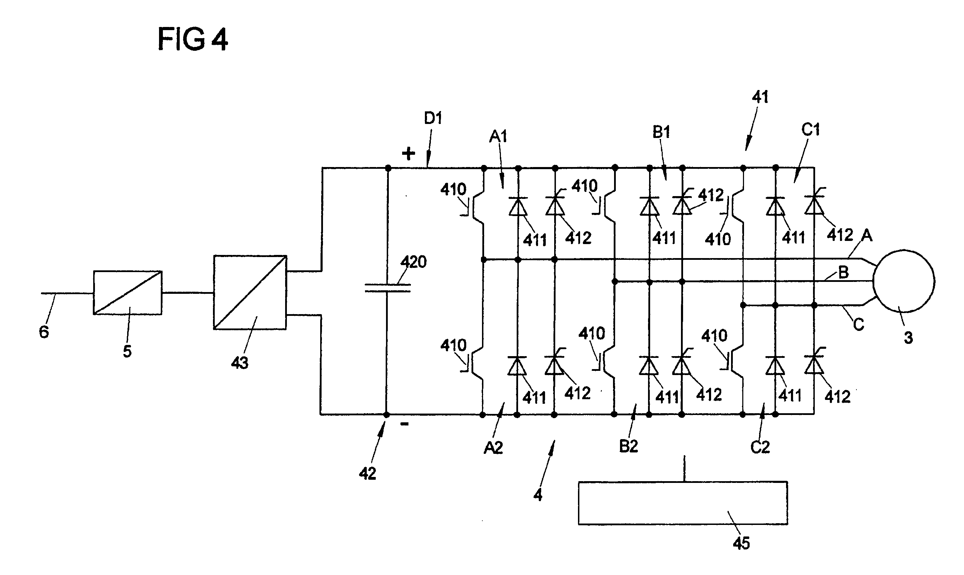

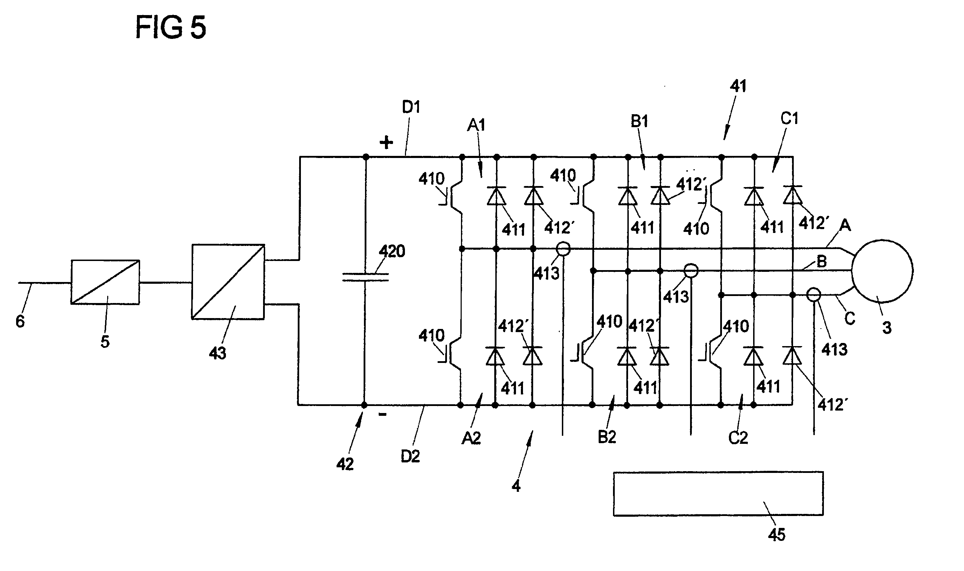

In order to design the generator converter 41 in a cost efficient manner it can be provided that in addition to the diode elements 411 serving as free-wheeling diodes, which are by standard connected anti-parallel to the semi-conductor switches 410, a thyristor 412 (see embodiment according to Fig. 4) or an additional diode element 412' (see embodiment according to Fig.5) is connected parallel in each path A1, A1, B1, B2, C1, C2.

The thyristor 412 is hereby constantly fired in the diode rectifying operation of the generator converter 41 and behaves thus like a diode, wherein the threshold voltage of the thyristor 412 should be smaller than the threshold voltage of the parallel diode elements 411 such that the current flows preferably through the thyristor 12 for rectification.

The threshold voltage of the additional diode element 412' should also be smaller for the additional diode element 412' than the threshold voltage of the parallel diode element 411 such that during diode rectifying operation the current is preferably conducted via the additional diode element 412'.

In this context it is also conceivable to connect more than one additional element 412' and/or more than one additional thyristor 412 parallel to the diode elements 411 serving as free-wheeling diodes. It is also conceivable to arrange an additional diode element 412' in addition to a thyristor 412 in a path.

If an additional diode element 412' is used in each path A1, A2, B1, B2, C1, C2 of the generator converter 41 then it is required at each connection A, B, C of the generator 3 to measure the generator current in front of the paths A1, A2, B1, B2, C1, C2. Accordingly, current instrument transformers 413 are provided at the connections A, B, C for measuring the current in the embodiment according to Fig. 5.

Such current instrument transformers 413 can be optionally provided in each of the embodiments, are however in particular preferred in the embodiment according to Fig. 5 since here in the 4-quadrant converter operation the current cannot be measured by itself in the semi-conductor switch component (consisting of the semi-conductor switch 410 and the diode element 411 being anti-parallel thereto). The current instrument transformer 413 serves therefore to detect the (total) current at the respective connection A, B, C for the pulsed operation of the semi-conductor switch 410. In the embodiments according to Fig. 2, 3 and Fig. 4 a current measurement via additional current instrument transformer 413 is in general not required since here the current can be detected by itself in the respective semi-conductor switch components (consisting of the semi-conductor switch 410 and the anti-parallel diode element 411, respectively).

By using a frequency converter 4 capable of being switched in its operating mode of the kind described here it is possible to operate the generator converter 41 as 4-quadrant converter in a low power range and as diode rectifier in a high power range. In this way it is possible to operate the generator converter 41 as 4-quadrant converter for instance up top 10% of the nominal power of the wind power station 1, optionally even up to 30% of the nominal power. In case of higher power the generator converter 41 is operated accordingly in the diode rectifying operation such that the semiconductor switches 410 of the generator converter 41 have to be designed accordingly also only for low power and as a result, a cost efficient design is provided. The generator converter 41 can thus be produced in a cost efficient manner. Furthermore, the reliability of the generator converter 41 can be increased, since the required switching power of the semiconductor switches 410 is overall reduced.

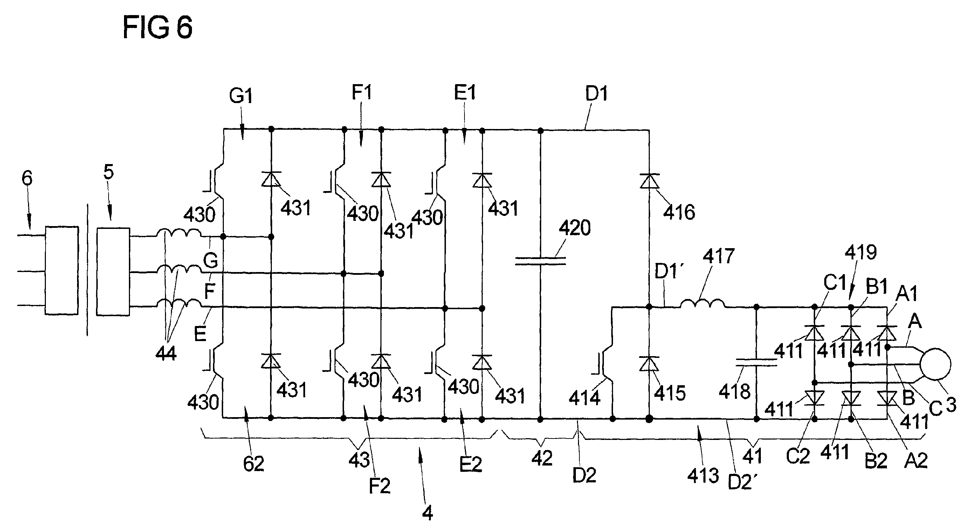

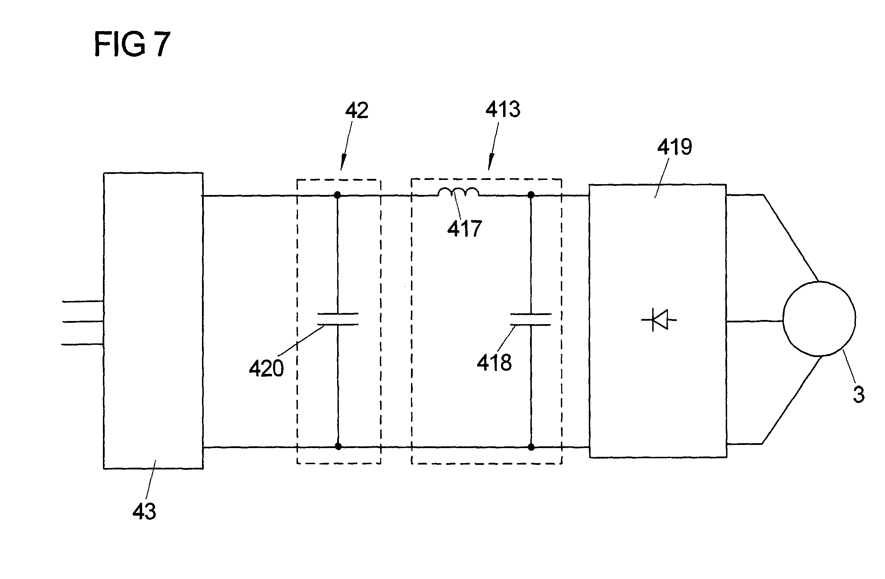

Figures 6 and 7 show a further embodiment of a frequency converter 4 in which a generator converter 41 - in contrast to the previously described embodiments by the means of Figures 2 to 5 - is operated in a first operating mode in a DC voltage transforming operation and in a second operating mode in a diode rectifying operation.

In case of the embodiment illustrated in Figures 6 and 7 the construction is identical to the previously described embodiments apart from the design of the generator converter 41. The converter 4 comprises in particular also in the embodiment according to Figures 6 and 7 an intermediate circuit 42 comprising a condenser 420 and a grid converter 43 downstream of the intermediate circuit 41 via which a DC voltage of the intermediate circuit 42 is delivered in an inverted manner via a transformer 5 to the electricity grid 6. Since the design of a converter 4 is identical to the previously described embodiments in respect to the intermediate circuit 42 and the grid converter 43 it is referred in this respect to the previous description.

In case of the previously described embodiments the generator converter 41 is designed in its basic construction as 4-quadrant converter, wherein the generator converter 41 can be operated in a first operating mode as a 4-quadrant converter and in a second operating mode as a diode rectifier by suitable controlling the semiconductor switches. In contrast thereto, the generator converter 41 comprises in the embodiment according to Figures 6 and 7 a diode rectifying circuit 419 and a DC voltage transforming circuit 413 downstream of this diode rectifying circuit 419, which serves to transform a voltage rectified by the diode rectifying circuit 409 and to feed to the intermediate circuit 42.

The diode rectifying circuit 419 comprises paths A1, A2, B1, B2, C1, C2 via which the three connections A, B, C of the generator 3 is connected to the paths D1', D2' of the DC voltage transforming circuit 413. In each path A1, A2, B1, B2, C1, C2 of the diode rectifying circuit 419 a diode element 411 is arranged such that the diode rectifying circuit 419 is constructed as a diode rectifier according to the type of a so called B6-Bridge. In case of the embodiment the diode rectifying circuit 419 does not comprise semiconductor switches and is thus provided solely passively.

The DC voltage transforming circuit comprises a semiconductor switch 414 and a diode element 415 connected anti-parallel thereto. An inductor 417 is arranged in the path D1'. The paths D1', D2' are connected with each other via a condenser 418 at the end of the inductor 417 facing the diode rectifying circuit 419 while the semiconductor switch 414 as well as the diode element 415 connected anti-parallel thereto are arranged between the paths D1', D2' at the end of the inductor 417 facing away from the diode rectifying circuit 419. The path D1' is furthermore connected via a diode element 416 to the path D1 of the intermediate circuit 42, whereby it is also conceivable in a modified embodiment to arrange a semiconductor switch anti-parallel to the diode element 416.

The DC voltage transforming circuit 413 serves to transform a rectified voltage delivered by the diode rectifying circuit 419 in a first operating mode of the generator converter in order to feed the transformed voltage to the intermediate circuit 42. In this manner, the voltage can be increased by the DC voltage transforming circuit 413 in the first operating mode, in particular at lower wind power and accordingly at a lower voltage generated by the generator 3 and thus an increased voltage can be delivered to the intermediate circuit 42. In this manner, a feeding of energy into the electrical grid 6 is also possible at lower wind power, in analogy as it has been previously described for the embodiments according to Figures 2 to 5.

The semiconductor switch 414 is controlled in the first operating mode in a pulsed manner. In this manner, the (small) voltage delivered by the diode rectifying circuit 419 can be increased to the (large) voltage of the intermediate circuit 42.

In the second operating mode the semiconductor switch 414 of the DC voltage transforming circuit 413 is set into a locked state. In this second operating mode, in which the generator converter 41 is operated at larger wind power, the voltage delivered by the diode rectifying circuit 419 exceeds the intermediate circuit voltage at the intermediate circuit 42 such that the diode element 416 is conductive and the equivalent circuit diagram schematically illustrated in Figure 7 is provided. Accordingly, the voltage delivered by the diode rectifying circuit 419 is transferred in a passive manner to the intermediate circuit 42.

In the second operating mode, corresponding to a sole diode rectifying operation no pulsed controlling of the semiconductor switch 414 occurs, rather said switch is kept in a locked status. A sole diode rectifying operation is provided.

As previously described for the embodiments according to Figures 2 to 5 the excitation of the generator 3 can be adapted depending on the operating mode or also within the operating mode when operating the embodiment according to Figures 6 and 7. Thus, the excitation of the generator 3 can be increased in particular in the second operating mode such that the generator 3 provides a large output voltage and the generator converter 41 can be operated economically as diode rectifier. It is referred additionally to the previous description.

In case of all described embodiments of the generator converter 41 the additional advantage is provided that no power switch such as contactors or the like are required. The change of the operating mode occurs solely by a suitable controlling of the used semiconductor switches 410 as well as the generator 3.

The idea on which the invention is based is not restricted to the previously described embodiments. In particular, also other constructions of a generator converter are in general conceivable, which allow a switching of operating modi.

### List of Reference Signs

- 1: wind power station
- 10: wind turbine
- 11: nacelle
- 12: tower
- 2: gear
- 3: generator
- 4: frequency converter
- 41: generator converter
- 410: semiconductor switch
- 411: diode element
- 412: thyristor
- 412': diode element
- 413: DC voltage transforming circuit
- 414: semiconductor switch
- 415, 416: diode element
- 417: inductor
- 418: condenser
- 419: diode rectifying circuit
- 42: intermediate circuit
- 420: condenser
- 42: grid converter
- 430: semiconductor switch
- 431: diode element
- 44: grid inductors
- 45: control device
- 5: transformer
- 6: electricity grid
- A, B, C: connection
- A1, A2, B1, B2, C1, C2: path
- D1, D2, D1', D2': path
- I, F, G: path
- I1, 12, F1, F2, G1, G2: path
- W: wind

## Claims

1. Wind power station comprising:
- a wind turbine capable of being driven by wind power,
- a generator capable of being driven by the wind turbine and designed for converting kinetic energy of the wind turbine into an electrical alternating current,
- a frequency converter electrically connected to the generator, the frequency converter being constituted to be connected to an electricity grid and being designed to convert the electrical alternating current generated by the generator for feeding into the electricity grid, wherein the frequency converter comprises a generator converter connected to the generator, an intermediate circuit connected to the generator converter and a grid converter connected to the intermediate circuit for connecting to the electricity grid, wherein the generator converter and the grid converter comprise in each case at least one semiconductor switch and a least one diode element connected in anti-parallel fashion to the at least one semiconductor switch, and
- a control device for controlling the frequency converter,
**characterized in that**
the control device (45) is designed to operate the generator converter (41) depending on the wind power driving the wind turbine
- by pulsed switching of the at least one semiconductor switch (410, 414) in a first operating mode, or
- by shifting the at least one semiconductor switch (410, 414) into a locked state in a second operating mode being different from the first operating mode, wherein the generator converter (41) is operated as diode rectifier.

2. Wind power station according to claim 1, **characterized in that** the control device (45) is designed to operate the generator converter (41)
- in a first wind power range below a predetermined wind velocity, speed of a generator (3) or power of the generator (3) in the first operating mode arid
- in a second wind power range above a predetermined wind velocity, speed of the generator (3) or power of the generator (3) in the second operating mode.

3. Wind power station according claim 2, **characterized in that**
- the predetermined wind velocity at which it is being switched between the first operating mode and the second operating mode of the generator converter (41) is in a range between 4 m/s and 8 m/s, preferably between 4 m/s and 6 m/s, or
- the predetermined speed of the generator (3) is between 1200 U/min and 1400 U/min or
- the predetermined power of the generator (3) is between 10 % and 30 %, preferably 20 % and 30 % of the nominal power of the generator (3).

4. Wind power station according one of the claims 1, 2, 3, **characterized in that** the control device (45) is designed to drive the generator converter (41) depending on the wind power driving the wind turbine
- by pulsed switching of the at least one semiconductor switch (410) as 4-quadrant converter or
- by shifting the at least one semiconductor switch (410) into locked status as diode rectifier.

5. Wind power station according to claim 4, **characterized in that** the generator (3) comprises three connections (A, B, C) for generating a three phase alternating current, wherein each connection (A, B, C) is connected via a first path (A1, B1, C1) of the generator converter (41) to a first path (D1) of the intermediate circuit (42) and is connected via a second path (A2, B2, C2) of the generator converter (41) to a second path (D2) of the intermediate circuit (42), wherein in each path (A1, A2, B1, B2, C1, C2) of the generator converter (41), a semiconductor switch (410) and diode element (411, 412') anti-parallel connected thereto are arranged.

6. Wind power station according to one of the proceeding claims, **characterized in that** two diode elements (411, 412') or a diode element (411) and a thyristor (412) are anti-parallel connected to each semiconductor switch (410) of the generator converter (41).

7. Wind power station according to one of the claims 1, 2, 3, **characterized in that** the control device (45) is designed to operate the generator converter (41) depending on the wind power driving the turbine
- by pulsed switching of the at least.one semiconductor switch (414) in a dc-voltage-transforming operation as diode rectifier with down stream dc-voltage-transformation, or
- by shifting the at least one semiconductor switch (414) into a locked state in diode rectifying operation as diode rectifier.

8. Wind power station according to claim 7, **characterized in that** during dc-voltage transforming operation a dc-voltage rectified by the diode rectifying circuit (419) is transformed by pulsed switching of the at least one semiconductor switch (414) and the transformed dc-voltage is provided to the intermediate circuit (42), while during diode rectifying operation the dc-voltage rectified by the diode rectifying circuit (419) is provided to the intermediate circuit (42) by switching the at least one semiconductor switch (414) into the locked state.

9. Wind power station according to claim 8, **characterized in that** the diode rectifying circuit (419) is connected to the intermediate circuit (42) via a dc-voltage transforming circuit (413), wherein the at least one semiconductor switch (414) is a component thereof.

10. Wind power station according to claim 9, **characterized in that** the generator (3) comprises three connections (A, B, C) for generating a 3-phase alternating current, wherein each connection (A, B, C) is connected via a first path (A1, B1, C1) of the diode rectifying circuit (419) to a first path (D1') of the dc-voltage transforming circuit (413) and is connected via second path (A2, B2, C2) of the diode rectifying circuit (419) to a second path (D2') of the dc-voltage transforming circuit (413), wherein a diode element (411) is arranged in each path (A1, A2, B1, B2, C1, C2) of the diode rectifying circuit (419).

11. Wind power station according to one the preceding claims, **characterized in that** the generator (3) is designed as a synchronous generator, wherein the generator (3) is excited separately, and wherein the excitation is changeable depending on the operating state of the frequency converter (4).

12. Method for operating wind power station, which comprises
- a wind turbine capable of being driven by wind power,
- a generator capable of being driven by the wind turbine, which is designed to transform kinetic energy of the wind turbine into electric alternating current,
- a frequency converter electrically connected to the generator, which is connected to a electricity grid and designed to convert the electric alternating current generated by the generator for feeding into the electricity grid, wherein the frequency converter comprises a generator converter connected to the generator, an intermediate circuit connected to the generator converter, and a grid converter connected to the intermediate circuit for connecting to the electricity grid, wherein the generator converter and the grid converter comprise in each case at least one semiconductor switch and at least one diode element anti-parallel connected to the at least one semiconductor switch, and
- a control device for controlling the frequency converter,
**characterized in that**
the control device (45) operates the generator converter (41) depending on the wind power driving the wind turbine
- by pulsed switching of the at least one semiconductor switch (410, 414) in a first operating mode or
- by shifting the at least one semiconductor switch (410, 414) into a locked state in a second operating mode different from the first operating mode, wherein the generator converter (41) is operated as diode rectifier.

13. Method according to claim 12, **characterized in that** the control device (45) operates the generator converter (41) in a first wind power range below a predetermined wind velocity, speed of the generator (3) or power of the generator (3) in the first operating mode and in the second wind power range above predetermined wind velocity, speed of the generator (3) or power of the generator (3) in the second operating mode.

14. Method according to claims 12 or 1317, **characterized in that** the generator (3) is designed as a synchronous generator excited separately, wherein the excitation of the generator (3) is increased when changing from the first operating mode into the second operating mode of the generator converter (41).

15. Method according to one of the claims 12-14, **characterized in that** the excitation of the generator (3) is already increased when changing from the first operating mode into the second operating mode of the generator converter (41) before the control device (45) switches the at least one semiconductor switch (410) of the generator converter (41) into the locking state and simultaneously a blind current is imparted to the generator (3) for limiting the voltage generated by the generator (3).

## Patentansprüche

1. Windkraftanlage umfassend:
- ein Windrad, das durch Windenergie angetrieben werden kann,
- einen Generator, der durch das Windrad angetrieben werden kann und dazu ausgelegt ist, kinetische Energie des Windrads in elektrischen Wechselstrom umzuwandeln,
- einen Frequenzumrichter, der mit dem Generator elektrisch verbunden ist, wobei der Frequenzumrichter dazu ausgebildet ist, mit einem Stromnetz verbunden zu werden und dazu ausgelegt ist, den durch den Generator erzeugten elektrischen Wechselstrom umzuwandeln, um ihn in das Stromnetz einzuspeisen, wobei der Frequenzumrichter einen mit dem Generator verbundenen Generatorumrichter, einen mit dem Generatorumrichter verbundenen Zwischenkreis und einen mit dem Zwischenkreis verbundenen Netzumrichter zum Anschluss an das Stromnetz umfasst, wobei der Generatorumrichter und der Netzumrichter jeweils mindestens einen Halbleiterschalter und mindestens ein Diodenelement umfassen, das mit dem mindestens einen Halbleiterschalter antiparallel verbunden ist, und
- eine Steuervorrichtung zum Steuern des Frequenzumrichters,
**dadurch gekennzeichnet, dass**
die Steuervorrichtung (45) dazu ausgelegt ist, den Generatorumrichter (41) in Abhängigkeit von der das Windrad antreibenden Windenergie
- durch gepulstes Schalten des mindestens einen Halbleiterschalters (410, 414) in einer ersten Betriebsart zu betreiben, oder
- durch Umschalten des mindestens einen Halbleiterschalters (410, 414) in einen verriegelten Zustand in einer zweiten Betriebsart zu betreiben, die von der ersten Betriebsart verschieden ist, wobei der Generatorumrichter (41) als Diodengleichrichter betrieben wird.

2. Windkraftanlage nach Anspruch 1, **dadurch gekennzeichnet, dass** die Steuervorrichtung (45) dazu ausgelegt ist, den Generatorumrichter (41)
- in einem ersten Windenergiebereich unterhalb einer vorbestimmten Windgeschwindigkeit, Drehzahl eines Generators (3) oder Leistung des Generators (3) in der ersten Betriebsart zu betreiben, und
- in einem zweiten Windenergiebereich oberhalb einer vorbestimmten Windgeschwindigkeit, Drehzahl des Generators (3) oder Leistung des Generators (3) in der zweiten Betriebsart zu betreiben.

3. Windkraftanlage nach Anspruch 2, **dadurch gekennzeichnet, dass**
- die vorbestimmte Windgeschwindigkeit, bei der zwischen der ersten Betriebsart und der zweiten Betriebsart des Generatorumrichters (41) umgeschaltet wird, in einem Bereich zwischen 4 m/s und 8 m/s, vorzugsweise zwischen 4 m/s und 6 m/s liegt, oder
- die vorbestimmte Drehzahl des Generators (3) zwischen 1200 U/min und 1400 U/min liegt, oder
- die vorbestimmte Leistung des Generators (3) zwischen 10% und 30%, vorzugsweise zwischen 20% und 30% der Nennleistung des Generators (3) liegt.

4. Windkraftanlage nach einem der Ansprüche 1, 2, 3, **dadurch gekennzeichnet, dass** die Steuervorrichtung (45) dazu ausgelegt ist, den Generatorumrichter (41) in Abhängigkeit von der das Windrad antreibenden Windenergie
- durch gepulstes Schalten des mindestens einen Halbleiterschalters (410) als 4-Quadranten-Umrichter anzusteuern, oder
- durch Umschalten des mindestens einen Halbleiterschalters (410) in einen verriegelten Zustand als Diodengleichrichter anzusteuern.

5. Windkraftanlage nach Anspruch 4, **dadurch gekennzeichnet, dass** der Generator (3) drei Anschlüsse (A, B, C) zum Erzeugen eines Dreiphasenwechselstroms umfasst, wobei jeder Anschluss (A, B, C) über einen ersten Weg (A1, B1, C1) des Generatorumrichters (41) mit einem ersten Weg (D1) des Zwischenkreises (42) verbunden ist und über einen zweiten Weg (A2, B2, C2) des Generatorumrichters (41) mit einem zweiten Weg (D2) des Zwischenkreises (42) verbunden ist, wobei in jedem Weg (A1, A2, B1, B2, C1, C2) des Generatorumrichters (41) ein Halbleiterschalter (410) und ein antiparallel damit verbundenes Diodenelement (411, 412') angeordnet sind.

6. Windkraftanlage nach einem der vorhergehenden Ansprüche, **dadurch gekennzeichnet, dass** zwei Diodenelemente (411, 412') oder ein Diodenelement (411) und ein Thyristor (412) antiparallel mit jedem Halbleiterschalter (410) des Generatorumrichters (41) verbunden sind.

7. Windkraftanlage nach einem der Ansprüche 1, 2, 3, **dadurch gekennzeichnet, dass** die Steuervorrichtung (45) dazu ausgelegt ist, den Generatorumrichter (41) in Abhängigkeit von der das Windrad antreibenden Windenergie
- durch gepulstes Schalten des mindestens einen Halbleiterschalters (414) in einem Gleichspannungstransformationsvorgang als Diodengleichrichter mit nachgeschalteter Gleichspannungstransformation zu betreiben, oder
- durch Umschalten des mindestens einen Halbleiterschalters (414) in einen verriegelten Zustand in einem Diodengleichrichtungsvorgang als Diodengleichrichter zu betreiben.

8. Windkraftanlage nach Anspruch 7, **dadurch gekennzeichnet, dass** während des Gleichspannungstransformationsvorgangs eine durch den Diodengleichrichterkreis (419) gleichgerichtete Gleichspannung durch gepulstes Schalten des mindestens einen Halbleiterschalters (414) transformiert wird und die transformierte Gleichspannung dem Zwischenkreis (42) zugeführt wird, wohingegen während des Diodengleichrichtungsvorgangs die durch den Diodengleichrichterkreis (419) gleichgerichtete Gleichspannung dem Zwischenkreis (42) zugeführt wird, indem der mindestens eine Halbleiterschalter (414) in den verriegelten Zustand geschaltet wird.

9. Windkraftanlage nach Anspruch 8, **dadurch gekennzeichnet, dass** der Diodengleichrichterkreis (419) über einen Gleichspannungstransformationskreis (413) mit dem Zwischenkreis (42) verbunden ist, wobei der mindestens eine Halbleiterschalter (414) ein Bauelement davon ist.

10. Windkraftanlage nach Anspruch 9, **dadurch gekennzeichnet, dass** der Generator (3) drei Anschlüsse (A, B, C) zum Erzeugen eines Dreiphasenwechselstroms umfasst, wobei jeder Anschluss (A, B, C) über einen ersten Weg (A1, B1, C1) des Diodengleichrichterkreises (419) mit einem ersten Weg (D1') des Gleichspannungstransformationskreises (413) verbunden ist und über den zweiten Weg (A2, B2, C2) des Diodengleichrichterkreises (419) mit einem zweiten Weg (D2') des Gleichspannungstransformationskreises (413) verbunden ist, wobei ein Diodenelement (411) in jedem Weg (A1, A2, B1, B2, C1, C2) des Diodengleichrichterkreises (419) angeordnet ist.

11. Windkraftanlage nach einem der vorhergehenden Ansprüche, **dadurch gekennzeichnet, dass** der Generator (3) als Synchrongenerator ausgelegt ist, wobei der Generator (3) getrennt erregt wird und wobei die Erregung in Abhängigkeit vom Betriebszustand des Frequenzumrichters (4) änderbar ist.

12. Verfahren zum Betreiben einer Windkraftanlage, die Folgendes umfasst:
- ein Windrad, das durch Windenergie angetrieben werden kann,
- einen Generator, der durch das Windrad angetrieben werden kann und dazu ausgelegt ist, kinetische Energie des Windrads in elektrischen Wechselstrom umzuwandeln,
- einen Frequenzumrichter, der mit dem Generator elektrisch verbunden ist, wobei der Frequenzumrichter dazu ausgebildet ist, mit einem Stromnetz verbunden zu werden und dazu ausgelegt ist, den durch den Generator erzeugten elektrischen Wechselstrom umzuwandeln, um ihn in das Stromnetz einzuspeisen, wobei der Frequenzumrichter einen mit dem Generator verbundenen Generatorumrichter, einen mit dem Generatorumrichter verbundenen Zwischenkreis und einen mit dem Zwischenkreis verbundenen Netzumrichter zum Anschluss an das Stromnetz umfasst, wobei der Generatorumrichter und der Netzumrichter in jeweils mindestens einen Halbleiterschalter und mindestens ein Diodenelement umfassen, das mit dem mindestens einen Halbleiterschalter antiparallel verbunden ist, und
- eine Steuervorrichtung zum Steuern des Frequenzumrichters,
**dadurch gekennzeichnet, dass**
die Steuervorrichtung (45) den Generatorumrichter (41) in Abhängigkeit von der das Windrad antreibenden Windenergie
- durch gepulstes Schalten des mindestens einen Halbleiterschalters (410, 414) in einer ersten Betriebsart betreibt, oder
- durch Umschalten des mindestens einen Halbleiterschalters (410, 414) in einen verriegelten Zustand in einer zweiten Betriebsart betreibt, die von der ersten Betriebsart verschieden ist, wobei der Generatorumrichter (41) als Diodengleichrichter betrieben wird.

13. Verfahren nach Anspruch 12, **dadurch gekennzeichnet, dass** die Steuervorrichtung (45) den Generatorumrichter (41) in einem ersten Windenergiebereich unterhalb einer vorbestimmten Windgeschwindigkeit, Drehzahl des Generators (3) oder Leistung des Generators (3) in der ersten Betriebsart betreibt und in dem zweiten Windenergiebereich oberhalb einer vorbestimmten Windgeschwindigkeit, Drehzahl des Generators (3) oder Leistung des Generators (3) in der zweiten Betriebsart betreibt.

14. Verfahren nach Anspruch 12 oder 13, **dadurch gekennzeichnet, dass** der Generator (3) als getrennt erregter Synchrongenerator ausgelegt ist, wobei sich die Erregung des Generators (3) erhöht, wenn von der ersten Betriebsart in die zweite Betriebsart des Generatorumrichters (41) gewechselt wird.

15. Verfahren nach einem der Ansprüche 12-14, **dadurch gekennzeichnet, dass** die Erregung des Generators (3) bereits erhöht ist, wenn von der ersten Betriebsart in die zweite Betriebsart des Generatorumrichters (41) gewechselt wird, bevor die Steuervorrichtung (45) den mindestens einen Halbleiterschalter (410) des Generatorumrichters (41) in den verriegelten Zustand schaltet, und gleichzeitig wird der Generator (3) mit einem Blindstrom beaufschlagt, um die durch den Generator (3) erzeugte Spannung zu begrenzen.

## Revendications

1. Centrale éolienne, comprenant :
- une éolienne capable d'être entraînée par l'énergie éolienne,
- un générateur capable d'être entraîné par l'éolienne et conçu pour convertir l'énergie cinétique de l'éolienne en un courant électrique alternatif,
- un convertisseur de fréquence électriquement connecté au générateur, le convertisseur de fréquence étant constitué de sorte à être connecté à un réseau d'électricité et étant conçu pour convertir le courant électrique alternatif généré par le générateur pour alimenter le réseau d'électricité, dans laquelle le convertisseur de fréquence comprend un convertisseur de générateur connecté au générateur, un circuit intermédiaire connecté au convertisseur de générateur et un convertisseur de réseau connecté au circuit intermédiaire pour une connexion au réseau d'électricité, dans laquelle le convertisseur de générateur et le convertisseur de réseau comprennent dans chaque cas au moins un interrupteur à semi-conducteur et au moins un élément de diode connecté en antiparallèle à l'au moins un interrupteur à semi-conducteur, et
- un dispositif de commande pour commander le convertisseur de fréquence,
**caractérisée en ce que**
le dispositif de commande (45) est conçu pour commander le convertisseur de générateur (41) en fonction de l'énergie éolienne entraînant l'éolienne
- par la commutation pulsée de l'au moins un interrupteur à semi-conducteur (410, 414) dans un premier mode de fonctionnement, ou
- par le déplacement de l'au moins un interrupteur à semi-conducteur (410, 414) dans un état verrouillé dans un second mode de fonctionnement différent du premier mode de fonctionnement, dans lequel le convertisseur de générateur (41) est commandé en tant que redresseur à diode.

2. Centrale éolienne selon la revendication 1, **caractérisée en ce que** le dispositif de commande (45) est conçu pour commander le convertisseur de générateur (41)
- dans une première plage d'énergie éolienne en dessous d'une vitesse du vent, d'une vitesse d'un générateur (3), ou d'une puissance du générateur (3) prédéterminées dans le premier mode de fonctionnement et
- dans une seconde plage d'énergie éolienne au-dessus d'une vitesse du vent, d'une vitesse du générateur (3), ou d'une puissance du générateur (3) prédéterminées dans le second mode de fonctionnement.

3. Centrale éolienne selon la revendication 2, **caractérisée en ce que**
- la vitesse prédéterminée du vent à laquelle a lieu la commutation entre le premier mode de fonctionnement et le second mode de fonctionnement du convertisseur de générateur (41) est dans une plage de 4 m/s à 8 m/s, de préférence de 4 m/s à 6 m/s, ou
- la vitesse prédéterminée du générateur (3) va de 1 200 U/min à 1 400 U/min ou
- la puissance prédéterminée du générateur (3) est de 10 % à 30 %, de préférence de 20 % à 30 % de la puissance nominale du générateur (3).

4. Centrale éolienne selon une des revendications 1, 2, 3, **caractérisée en ce que** le dispositif de commande (45) est conçu pour entraîner le convertisseur de générateur (41) en fonction de l'énergie éolienne entraînant l'éolienne
- par commutation pulsée de l'au moins un interrupteur à semi-conducteur (410) en tant que convertisseur 4 quadrants ou
- par déplacement de l'au moins un interrupteur à semi-conducteur (410) dans l'état verrouillé en tant que redresseur à diode.

5. Centrale éolienne selon la revendication 4, **caractérisée en ce que** le générateur (3) comprend trois connexions (A, B, C) pour générer un courant alternatif triphasé, dans laquelle chaque connexion (A, B, C) est connectée par l'intermédiaire d'un premier trajet (A1, B1, C1) du convertisseur de générateur (41) à un premier trajet (D1) du circuit intermédiaire (42) et est connectée par l'intermédiaire d'un second trajet (A2, B2, C2) du convertisseur de générateur (41) à un second trajet (D2) du circuit intermédiaire (42), dans laquelle dans chaque trajet (A1, A2, B1, B2, C1, C2) du convertisseur de générateur (41), sont agencés un interrupteur à semi-conducteur (410) et un élément de diode (411, 412') connecté en antiparallèle à celui-ci.

6. Centrale éolienne selon une des revendications précédentes, **caractérisée en ce que** deux éléments de diode (411, 412') ou un élément de diode (411) et un thyristor (412) sont connectés en antiparallèle à chaque interrupteur à semi-conducteur (410) du convertisseur de générateur (41).

7. Centrale éolienne selon une des revendications 1, 2, 3, **caractérisée en ce que** le dispositif de commande (45) est conçu pour commander le convertisseur de générateur (41) en fonction de l'énergie éolienne entraînant l'éolienne
- par commutation pulsée de l'au moins un interrupteur à semi-conducteur (414) dans une opération de transformation de tension continue en tant que redresseur à diode avec transformation de la tension continue en aval, ou
- par déplacement de l'au moins un interrupteur à semi-conducteur (414) dans un état verrouillé dans une opération de redressement de diode en tant que redresseur à diode.

8. Centrale éolienne selon la revendication 7, **caractérisée en ce que** pendant l'opération de transformation de tension continue une tension continue redressée par le circuit redresseur à diode (419) est transformée par la commutation pulsée de l'au moins un interrupteur à semi-conducteur (414) et la tension continue transformée est fournie au circuit intermédiaire (42), tandis que pendant l'opération de redressement de diode la tension continue redressée par le circuit redresseur à diode (419) est fournie au circuit intermédiaire (42) par commutation de l'au moins un interrupteur à semi-conducteur (414) dans l'état verrouillé.

9. Centrale éolienne selon la revendication 8, **caractérisée en ce que** le circuit redresseur à diode (419) est connecté au circuit intermédiaire (42) par l'intermédiaire du circuit de transformation de tension continue (413), dans laquelle l'au moins un interrupteur à semi-conducteur (414) est un composant de celui-ci.

10. Centrale éolienne selon la revendication 9, **caractérisée en ce que** le générateur (3) comprend trois connexions (A, B, C) pour générer un courant alternatif triphasé, dans laquelle chaque connexion (A, B, C) est connectée par l'intermédiaire d'un premier trajet (A1, B1, C1) du circuit redresseur à diode (419) à un premier trajet (D1') du circuit de transformation de tension continue (413) et est connectée par l'intermédiaire d'un second trajet (A2, B2, C2) du circuit redresseur à diode (419) à un second trajet (D2') du circuit de transformation de tension continue (413), dans laquelle un élément de diode (411) est agencé dans chaque trajet (A1, A2, B1, B2, C1, C2) du circuit redresseur à diode (419).

11. Centrale éolienne selon une des revendications précédentes, **caractérisée en ce que** le générateur (3) est conçu comme un générateur synchrone, dans laquelle le générateur (3) est excité séparément, et dans laquelle l'excitation est variable en fonction de l'état de fonctionnement du convertisseur de fréquence (4).

12. Procédé de fonctionnement d'une centrale éolienne, qui comprend
- une éolienne capable d'être entraînée par l'énergie éolienne,
- un générateur capable d'être entraîné par l'éolienne, qui est conçu pour transformer l'énergie cinétique de l'éolienne en courant électrique alternatif,
- un convertisseur de fréquence électriquement connecté au générateur, qui est connecté à un réseau d'électricité et conçu pour convertir le courant électrique alternatif généré par le générateur pour alimenter le réseau d'électricité, dans lequel le convertisseur de fréquence comprend un convertisseur de générateur connecté au générateur, un circuit intermédiaire connecté au convertisseur de générateur et un convertisseur de réseau connecté au circuit intermédiaire pour une connexion au réseau d'électricité, dans lequel le convertisseur de générateur et le convertisseur de réseau comprennent dans chaque cas au moins un interrupteur à semi-conducteur et au moins un élément de diode connecté en antiparallèle à l'au moins un interrupteur à semi-conducteur, et
- un dispositif de commande pour commander le convertisseur de fréquence,
**caractérisé en ce que**
le dispositif de commande (45) commande le convertisseur de générateur (41) en fonction de l'énergie éolienne entraînant l'éolienne
- par la commutation pulsée de l'au moins un interrupteur à semi-conducteur (410, 414) dans un premier mode de fonctionnement, ou
- par le déplacement de l'au moins un interrupteur à semi-conducteur (410, 414) dans un état verrouillé dans un second mode de fonctionnement différent du premier mode de fonctionnement, dans lequel le convertisseur de générateur (41) est commandé en tant que redresseur à diode.

13. Procédé selon la revendication 12, **caractérisé en ce que** le dispositif de commande (45) commande le convertisseur de générateur (41) dans une première plage d'énergie éolienne en dessous d'une vitesse du vent, d'une vitesse du générateur (3), ou d'une puissance du générateur (3) prédéterminées dans le premier mode de fonctionnement et dans la seconde plage d'énergie éolienne au-dessus d'une vitesse du vent, d'une vitesse du générateur (3), ou d'une puissance du générateur (3) prédéterminées dans le second mode de fonctionnement.

14. Procédé selon les revendications 12 ou 13, **caractérisé en ce que** le générateur (3) est conçu en tant que générateur synchrone excité séparément, dans lequel l'excitation du générateur (3) est accrue lors du passage du premier mode de fonctionnement au second mode de fonctionnement du convertisseur de générateur (41).

15. Procédé selon une des revendications 12 à 14, **caractérisé en ce que** l'excitation du générateur (3) est déjà accrue lors du passage du premier mode de fonctionnement au second mode de fonctionnement du convertisseur de générateur (41) avant que le dispositif de commande (45) commute l'au moins un interrupteur à semi-conducteur (410) du convertisseur de générateur (41) dans l'état de verrouillage et simultanément un courant réactif est délivré au générateur (3) pour limiter la tension générée par le générateur (3).
